Europäisches Patentamt

European Patent Office

Office européen des brevets

(11) Publication number: **0 080 048**
**B1**

(12) EUROPEAN PATENT SPECIFICATION

(45) Date of publication of patent specification: **21.08.85**

(51) Int. Cl.⁴: **D 06 F 58/28**

(21) Application number: **82109100.6**

(22) Date of filing: **01.10.82**

(54) **Laundry dryer or combined washer-dryer with sensor electrodes for sensing the residual moisture of the laundry.**

(30) Priority: **17.11.81 IT 3404981 u**

(43) Date of publication of application:
**01.06.83 Bulletin 83/22**

(45) Publication of the grant of the patent:
**21.08.85 Bulletin 85/34**

(84) Designated Contracting States:
**AT BE CH DE FR GB IT LI NL SE**

(56) References cited:
**DE-A-2 828 703**
**DE-A-2 839 333**
**DE-A-2 844 443**

(73) Proprietor: **INDUSTRIE ZANUSSI S.p.A.**
**Via Giardini Cattaneo 3**
**I-33170 Pordenone (IT)**

(72) Inventor: **Durazzani, Pietro**
**Via Papa Giovanni XXIII**
**I-33080 Porcia (Pordenone) (IT)**
Inventor: **Frucco, Giuseppe**
**Via Nazionale 64**
**I-33020 Enemonzo (Udine) (IT)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Courier Press, Leamington Spa, England.

## Description

The invention relates to a laundry dryer or combined washer dryer of the rotating drum type, comprising a charging opening with a transparent closure window and means for controlling the risidual moisture of the laundry, said means including sensor electrodes which comprise metallized areas on the interior surface of said window.

From the DE—A—28 39 333 it is known to provide sensor electrodes on the interior surface of a window of a laundry dryer. These electrodes control the risidual moisture of the laundry. As soon as the laundry therein has attained a predetermined degree of dryness, it is then possible to automatically stop the machine.

Further similar systems are known from the DE—A—28 44 443 and DE—A—28 28 703.

All these systems are of the electronic control type, their operation being based on the method for measuring the conductance between two sensing electrodes disposed in contact with the laundry.

The wet or moist laundry constitues a connecting bridge between the two electrodes, the conductance of which diminishes with the progress of the drying operation.

A control system senses, amplifies and measures the electric current flowing between the two electrodes.

As the conductance between the two electrodes diminishes below a certain value, the control system becomes operative to index the program unit of the machine so as to stop the latter.

In certain cases the sensor electrodes have been located in the interior of the rotating drum, so that their connection to the remainder of the control system requires the employ of sliding contacts which are generally known, subject to rapid wear, resulting in insufficient reliability.

To avoid these disadvantages, it is generally preferred to attach the sensor electrodes to the interior surface of the closure window which, particularly in the case of a combined washer dryer, is preferably transparent for permitting observation of the interior of the drum during the successive operating phases of the machine. This solution does not require the employ of sliding contacts, but is inconvenient in so far as the sensor electrodes reduce the transparency of the closure window.

It is therefore the task of the present invention to provide an assembly of the above stated type, in which the sensor electrodes are attached to the interior surface of the closure window without detracting from the transparent properties thereof.

According to the invention the task is solved with a laundry dryer or combined washer dryer as stated above therein, said metallized areas are substantially transparent, having a thickness on the order of a few microns.

Such metallized areas may be formed by the employ of per se known techniques so as to have a reduced thickness rendering them substantially transparent.

As a consequence, a great conducting area may be provided without effecting the transparency of the window.

Further characteristics and advantages of the invention will become evident from the following description of an exemplary embodiment with reference to the accompanying drawings, wherein:

Fig. 1 shows a diagrammatic perspective view of a laundry dryer or combined washer dryer in an embodiment of the invention, and

Fig. 2 shows an enlarged view of a detail of the interior surface of a closure window of the apparatus of Fig. 1.

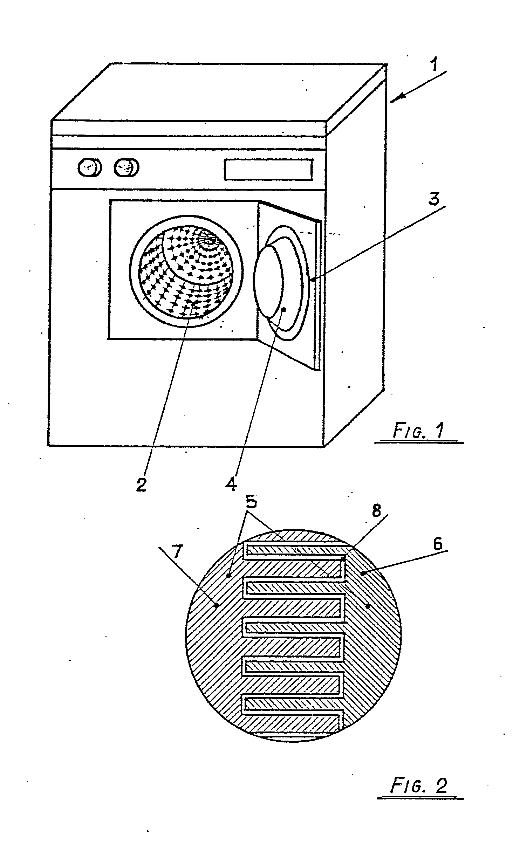

The apparatus shown in Fig. 1 is a laundry dryer or combined washer dryer 1 of the rotating drum type, having a forward facing charging opening 2 adapted to be closed by a door 3 provided with a window 4.

Applied to the interior surface of window 4 is a metallized layer 5, formed for instance of aluminium, comprising at least two areas 6, 7 separated from one another by a non-metallized and thus non-conductive area 8 on the interior surface of window 4.

The two areas 6 and 7 constitute a pair of sensor electrodes connected in a per se known manner to a system for controlling the residual moisture of the laundry. A system of this type is generally known and needs therefore not to be described.

The sensor electrodes may be readily applied to the interior surface of window 4 by employing any well-known metallizing technique permitting the electrode 6, 7 to be formed with an extremely reduced thickness in the order of a few microns.

This results in the surface of window 4 covered with the metallized layer 5 remaining substantially transparent as specified as an object of the invention. This arrangement also enables the entire surface of the window 4 to be employed for the formation of the electrodes 6, 7 without any restrictions as to their shapes and dimensions.

The sensor electrodes 6, 7 may thus be formed in the interdigitating configuration shown as an example in Fig. 2.

The laundry dryer or combined washer dryer according to the invention thus presents, on the interior surface of window 4, a pair of sensor electrodes 6, 7 having a sufficiently large contact surface for the laundry, so that the residual moisture thereof can be measured with a high degree of reliability.

The described laundry dryer or combined washer dryer may of course be modified in any suitable manner within the scope of the invention as defined in the claims appended hereto.

## Claim

Laundry dryer or combined washer-dryer of the rotating-drum type, comprising a charging opening with a transparent closure window, and means for controlling the residual moisture of the laundry, said means including sensor electrodes which comprise metallized areas on the interior surface of said window, characterized in that said metallized areas (6, 7) are substantially transparent, having a thickness in the order of a few microns.

## Patentanspruch

Wäschetrockner oder kombiniertes Wasch— und Trockengerät mit einer drehenden Trommel, mit einer Beladeöffnung, die ein durchsichtiges Schließfenster hat und mit einer Einrichtung, um die Restfeuchte der Wäsche zu erfassen, wobei diese Einrichtung eine Sensorelektrode umfaßt, die metallische Flächen an der Innenoberfläche des Fensters umfaßt, dadurch gekennzeichnet, daß die metallischen Bereiche (6, 7) im wesentlichen durchsichtig sind und ihre Dicke in der Größenordnung einiger weniger Mikrons liegt.

## Revendication

Sécheur de linge ou laveur-sécheur combiné du type à tambour rotatif, comprenant une ouverture de chargement pourvue d'une fenêtre transparente d'obturation, et des moyens pour contrôler l'humidité résiduelle du linge, lesdits moyens comprenant des électrodes de détection qui comportent des zones métallisées sur la surface intérieure de ladite fenêtre, caractérisé en ce que lesdites zones métallisées (6, 7) sont sensiblement transparentes, en ayant une épaisseur de l'ordre de quelques microns.

_FIG. 1_

_FIG. 2_